# EUROPÄISCHE PATENTSCHRIFT

(11) **EP 3 064 300 B1**
(45) Veröffentlichungstag und Bekanntmachung des Hinweises auf die Patenterteilung: **27.12.2017**
(21) Anmeldenummer: 16000508.8
(22) Anmeldetag: 03.03.2016
(51) Int. Cl.: B23B 31/103, B23B 31/113

(54) **MODULARE SCHNITTSTELLE FÜR DREHFESTE UND ROTIERENDE WERKZEUGE**
MODULAR INTERFACE FOR ROTATING AND ROTAIONALLY FIXED TOOLS
INTERFACE MODULAIRE POUR OUTILS ROTATIFS ET FIXES EN ROTATION

(30) Priorität: 05.03.2015 DE 102015002739
(43) Veröffentlichungstag der Anmeldung: 07.09.2016
(73) Patentinhaber: Benz GmbH, Werkzeugsysteme, 77716 Haslach (DE)
(72) Erfinder: Zeller, Christoph, D-77756 Hausach (DE); Giessler, Wilhelm, D-77790 Steinach (DE); Neumann, Andreas, D-77723 Gengenbach (DE); Ganter, Simon, D-79215 Elzach (DE); Geisselmann, Thomas, D-77716 Fischerbach (DE)
(74) Vertreter: Thämer, Wolfgang

(56) Entgegenhaltungen:
- EP-A1- 2 674 236
- EP-A1- 2 789 416
- DE-B4-102010 026 129

## Beschreibung

Die Erfindung betrifft eine Schnittstelle aus einer ersten - ein Werkzeug oder einen Werkzeughalter haltende - Baugruppe und einer zweiten - ein Bearbeitungselement tragende - Baugruppe für rotierende oder statische Bearbeitung, wobei die erste Baugruppe - als Teil einer rotierbaren Spindel oder Teil eines Meißels - zum einen eine Ausnehmung besitzt, die mindestens einen kegelstumpfmantel- oder zylinderförmigen Abschnitt hat und zum anderen eine in axialer Richtung - in Richtung der zweiten Baugruppe - wirkende Anlagefläche oder Kontaktstelle aufweist und wobei die zweite Baugruppe einen Zapfen hat, der zum einen einen kegel-, kegelstumpf- oder zylinderförmigen Abschnitt zur Anlage am kegelstumpfmantel- oder zylinderförmigen Abschnitt der ersten Baugruppe besitzt und zum anderen mindestens eine in axialer Richtung wirkende Kontaktstelle oder Anlagefläche zur Kontaktierung der Anlagefläche oder Kontaktstelle der ersten Baugruppe aufweist.

Aus der DE 10 2010 026 129.7 B4 ist eine derartige Schnittstelle bekannt. In der Ausnehmung der ersten Baugruppe ist ein ringförmiges Schalthebelelement längsverschiebbar oder schwenkbar angeordnet. Das Schalthebelelement hat mindestens ein - die zweite Baugruppe anlenkendes - Anlenkelement. Die zweite Baugruppe hat mindestens ein Hintergriffselement, das durch eine Schwenkbewegung der zweiten Baugruppe hinter das Anlenkelement des Schalthebelelements bringbar ist. Die Baugröße einer Schnittstelle mit einem derartigen Schalthebelelement ist hervorragend geeignet für größere Schnittstellen. Mit zunehmender Miniaturisierung der Schnittstelle nimmt die Eigensteifigkeit des Schalthebelelements jedoch schnell ab. Ein Schnittstelle gemäß dem Oberbegriff des Anspruchs 1 ist aus EP 2 674 236 A1 bekannt. Der vorliegenden Erfindung liegt das Problem zugrunde, eine Schnittstelle aus einer ersten Baugruppe und einer zweiten Baugruppe zu entwickeln, die bei jedem Werkzeugwechsel, unabhängig davon, ob es sich um ein rotierendes oder ortsfestes Werkzeug handelt - trotz geringer Schnittstellengröße - eine einfache Handhabung bei einer hohen Wiederholgenauigkeit bezüglich der Position der zweiten Baugruppe gegenüber der ersten Baugruppe gewährleistet.

Das Problem wird mit den Merkmalen des Patentanspruchs 1 gelöst. Zwischen der Ausnehmung und dem Zapfen ist ein bajonettartiger Verschluss mit mindestens einem am Zapfen vorhandenen Steg angeordnet. In der ersten Baugruppe ist ein Spannelement angeordnet, dessen vorderes Ende beim Spannen an einem der Stege zur Anlage kommt. Zwischen der Ausnehmung der ersten Baugruppe und dem Zapfen der zweiten Baugruppe ist ein bajonettartiger Verschluss mit mindestens einem - am Zapfen vorhandenen - Steg angeordnet. Der Steg des bajonettartigen Verschlusses hat - für das Klemmen in einem Spindelkopf der Spindel - eine erste Klemmflanke, deren Steigungswinkel kleiner ist als 30 Winkelgrade. Der Steg des bajonettartigen Verschlusses hat - für das Klemmen im Meißelkopf des Meißels - eine zweite Klemmflanke, deren Steigungswinkel im Bereich von 50 - 80 Winkelgraden liegt. In der ersten Baugruppe ist ein Spannelement angeordnet, dessen vorderes Ende beim Spannen an mindestens einem der Stege zur Anlage kommt.

Mit der Erfindung wird eine zweite Baugruppe gegenüber einer ersten Baugruppe verdrehsicher positioniert und wiederholgenau eingespannt. Die erste Baugruppe ist z.B. ein rotierender Spindelkopf eines Werkzeugwechselaggregats oder z.B. ein Drehmeißel, also ein nichtrotierendes Werkzeug, das ggf. ebenfalls von einem bei der Werkstückbearbeitung nichtrotierenden Werkzeugwechselaggregat aufgenommen wird. Die zweite Baugruppe stellt einen werkzeugtragenden Werkzeughalter oder ein Werkzeug dar.

Beim Einspannen einer zweiten in die erste Baugruppe verklemmen sich beide Baugruppen, eine Schnittstelle bildend, ineinander. Da die Baugruppen sehr kleine Bauteile sind, ihr maximaler Durchmesser misst im Ausführungsbeispiel nur 22 mm, können, um brauchbare Klemmkräfte zu erzeugen, keine feinmechanischen Getriebeteile eingesetzt werden. Die wenigen zu benutzenden Einzelteile müssen jeweils eine so hohe Formsteifigkeit haben, dass die Klemmkraft im Betrieb erhalten bleibt.

Die Lösung ist ein bajonettartiger Verschluss. Die zweite, in die erste Baugruppe hineinsteckbare Baugruppe, trägt radial abstehende Elemente wie Stege, Bolzen, Zapfen oder dergleichen. Die erste Baugruppe hat entsprechende Ausnehmungen oder Hintergriffe, in die die abstehenden Elemente beim Kuppeln der beiden Baugruppen unter mindestens einer translato-rischen und/oder rotatorischen Bewegung ineinandergreifen. Die abstehenden Elemente kontaktieren die Ausnehmungen oder Hintergriffe beispielsweise in punkt-, linien- oder flächenförmigen Kontakten. In der ersten Baugruppe ist ferner ein Spannelement untergebracht, mit dessen Hilfe die Kuppelbewegung unterstützt und/oder die Kupplung arretiert wird. Ggf. kann mit dem z.B. manuell bedienbaren Spannelement auch der Entkupplungsvorgang eingeleitet werden.

Die abstehenden Elemente und die Ausnehmungen oder Hintergriffe sind gegenseitig so angeordnet, dass beim Entkuppeln die zweite Baugruppe aus der ersten nach einem ersten Entklemmen oder Lösen der Kupplung nicht unmittelbar herausfallen kann. Zum kompletten Trennen der Baugruppen ist ein weiterer Handgriff erforderlich.

Die Erfindung beschreibt zwei verschiedene Ausführungsbeispiele. Das erste Beispiel umfasst als erste Baugruppe einen rotierenden Spindelkopf eines Werkzeugwechselaggregats, bei der die zweite Baugruppe einen Werkzeughalter darstellt, in dem ein Werkzeug, z.B. ein Spiralbohrer, eingespannt ist. Für eine automatisierte Bearbeitung ist für die CNC-Maschine neben dem Durchmesser die Bohrerlänge von Bedeutung. Mit Hilfe der bekannten Bohrerlänge kann die CNC-Maschine ein Bohrloch mit präzise vorgegebener Bohrlochtiefe bohren. Die Winkellage des Bohrers im Spannfutter des Werkzeughalters ist hier von untergeordneter Bedeutung. Für diesen Fall wird der Werkzeughalter über mindestens ein Spannelement gehalten, dessen Klemmflanke einen kleinen, relativ flachen Steigungswinkel von z.B. 12 Winkelgraden aufweist. Durch den flachen Steigungswinkel verklemmen sich der Werkzeughalter und der Spindelkopf beim Einspannen mit großem Reibschluss.

In einem zweiten Ausführungsbeispiel wird der rotierende Spindelkopf durch einen ortsfesten und/oder drehstarren Meißelkopf ersetzt. Letzterer stellt die erste Baugruppe dar. Als zweite Baugruppe wird der aus dem vorherigen Beispiel bekannte Werkzeughalter - in unveränderter Gestalt - verwendet. Der Meißelkopf kann Teil eines Stahlhalters sein, der im Oberschlitten einer konventionellen Drehmaschine eingespannt ist. Die zweite Baugruppe ist in diesem Fall der in einem Werkzeughalter angeordnete Drehstahl als Werkzeug oder als Schneidenträger.

In diesem Beispiel wird der Werkzeughalter über mindestens ein Spannelement gehalten, dessen Klemmflanke einen großen bzw. steilen Steigungswinkel von z.B. 66,5 Winkelgraden aufweist. Durch den großen Steigungswinkel verschwenkt sich der Werkzeughalter im Meißelkopf nur um wenige Winkelsekunden um seine Werkzeughaltermittellinie, wodurch sich die Position der Werkzeugschneide im Augenblick des Setzens der zwischen dem Meißelkopf und dem Werkzeughalter gelegenen Montagefugen in Richtung der Werkzeughaltermittellinie nur im hundertstel Millimeterbereich ändert. Dies erweist sich auch bezüglich der Wiederholgenauigkeit bei dem Werkzeugwechsel als vorteilhaft, wenn ein Werkzeug von einem Werkzeughalter zu einem anderen gewechselt wird.

Weitere Einzelheiten der Erfindung ergeben sich aus den Unteransprüchen und den nachfolgenden Beschreibungen von schematisch dargestellten Ausführungsformen.
- Figur 1:: Perspektivische Ansicht einer Schnittstelle aus einem Spindelkopf und einem Werkzeughalter;
- Figur 2:: wie Figur 1, jedoch um 180° geschwenkt;
- Figur 3:: Längsschnitt durch die im Gehäuse eines Werkzeugaggregats gelagerte Schnittstelle;
- Figur 4:: Unteransicht des Werkzeughalters;
- Figur 5:: Unteransicht des Spindelkopfs;
- Figur 6:: Seitenansicht des Werkzeughalters;
- Figur 7:: Perspektivische Ansicht der Exzenterschraube;
- Figur 8:: Perspektivische Ansicht der Spannzange aus Fig. 3;
- Figur 9:: Perspektivische Ansicht der Spannschraubhülse aus Figur 3;
- Figur 10:: Querschnitt durch die Schnittstelle im Bereich der Exzenterschraube, statischer Halter;
- Figur 11:: Längsschnitt durch die Schnittstelle im Bereich der Exzenterschraube, statischer Halter;
- Figur 12:: Abwicklung des Werkzeughalters oberhalb der Abwicklung des Meißelkopfs, wobei die Abwicklungen jeweils dem Mantel eines in der Schnittstellentrennfuge gelegenen, geraden Zylinders entspricht;
- Figur 13:: In die Abwicklung des Meißelkopfs eingeschobene Abwicklung des Werkzeughalters;
- Figur 14:: In die Abwicklung des Meißelkopfs seitlich verschobene Abwicklung des Werkzeughalters;
- Figur 15:: Einschwenken der Exzenterschraube;
- Figur 16:: In der Abwicklung des Meißelkopfs wird die Abwicklung des Werkzeughalters durch Schwenken der Exzenterschraube verschoben;
- Figur 17:: Durch Schwenken der Exzenterschraube wird die Abwicklung des Werkzeughalters festgeklemmt;
- Figur 18:: Herausschwenken der Exzenterschraube zum gegenseitigen Lösen der Abwicklungen;
- Figur 19:: Radiales Lösen und herausfallsicheres Einhängen;
- Figur 20:: Radiales Herausnehmen der Abwicklung des Werkzeughalters aus der Abwicklung des Meißelkopfs;
- Figur 21:: Perspektivische Ansicht einer Schnittstelle aus einem Meißelkopf und einem Werkzeughalter;
- Figur 22:: Perspektivische Ansicht des Meißelkopfs;
- Figur 23:: Seitenansicht des Werkzeughalters;
- Figur 24:: Perspektivische Ansicht des Spindelkopfs;
- Figur 25:: Seitenansicht des Werkzeughalters;
- Figur 26:: Abwicklung des Werkzeughalters oberhalb der Abwicklung des Spindelkopfs, wobei die Abwicklungen jeweils dem Mantel eines in der Schnittstellentrennfuge gelegenen, geraden Zylinders entspricht;
- Figur 27:: In der Abwicklung des Spindelkopfs wird die Abwicklung des Werkzeughalters durch Schwenken der Exzenterschraube verschoben;
- Figur 28:: Durch Schwenken der Exzenterschraube wird die Abwicklung des Werkzeughalters festgeklemmt;
- Figur 29:: Werkzeughalter mit Hilfsebenen zur Steilklemmflanke; vgl. zweite Figurenseite.

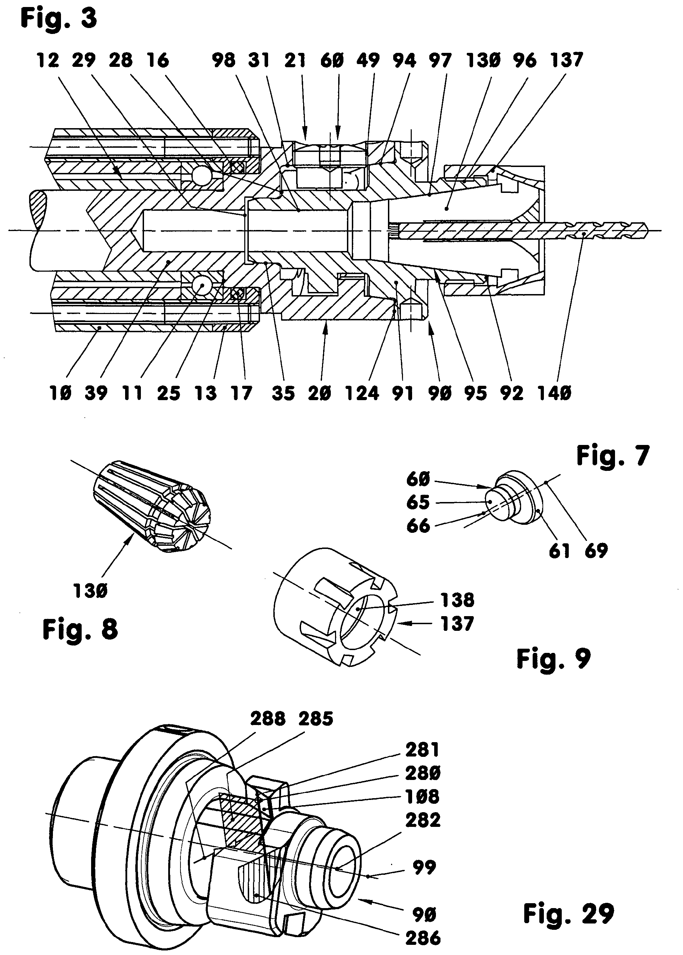

Die Figur 3 zeigt den vorderen Teil eines Werkzeugaggregats. Aus dessen Gehäuse (10) ragt ein Spindelkopf (20) als erste Baugruppe einer modularen Schnittstelle heraus. Im Spindelkopf (20) sitzt auswechselbar ein Werkzeughalter (90) als zweites Bauteil der modularen Schnittstelle. Der Werkzeughalter (90) trägt als Werkzeug (140) z.B. einen Spiralbohrer.

Das Gehäuse (10) und der Deckel (13) lagern das hintere Ende des Spindelkopfes (20) in zwei z.B. in einer in O-Anordnung angeordneten Schulterkugellagern (11), von denen nur das rechte Lager dargestellt ist. Die Außenringe der Schulterkugellager (11) sitzen axial fixiert zwischen dem Gehäuse (10) und dem Deckel (13). Die auf dem Schaft (39) des Spindelkopfs (20) gelagerten Innenringe der Lager (11) sitzen axial verspannt zwischen einer Spindelkopfschulter (25) und einem am Spindelkopf (20) befestigten - nicht dargestellten - Abstützbauteil.

Der Deckel (13) des Gehäuses (10) weist im vorderen Bereich eine zum Spindelkopf (20) hin orientierte Ringnut (16) auf, in der ein radial am Spindelkopf (20) anliegender Dichtring (17) eingelegt ist.

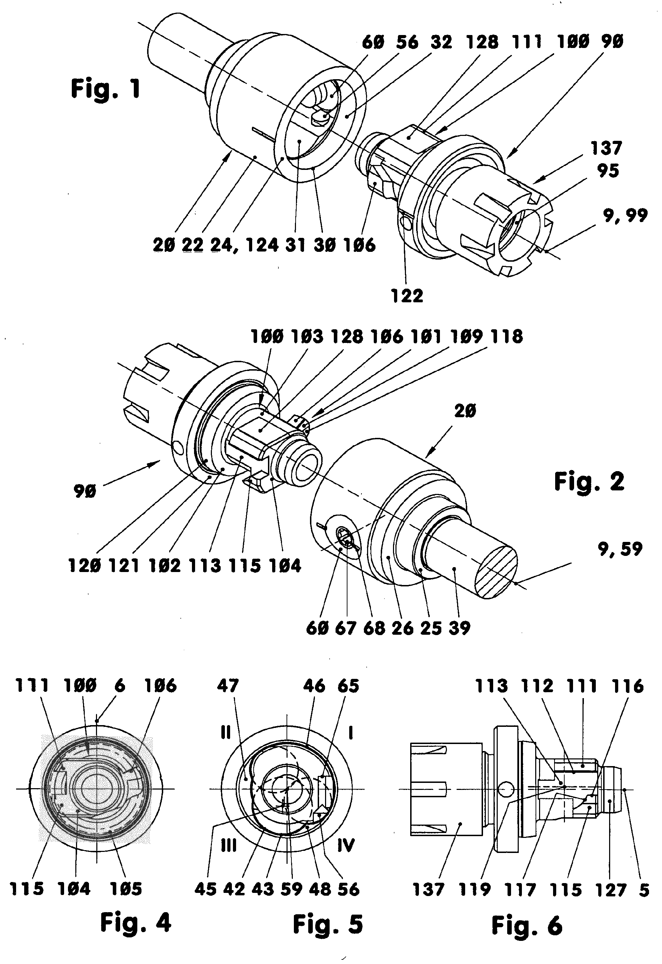

Aus dem Spindelkopf (20) ragt vorn ein rohrförmiger Spanngetriebeabschnitt (21) aus dem Gehäuse (10) heraus. Dieser Spanngetriebeabschnitt (21) hat z.B. eine zylindrische Außenwandung (22), vgl. auch Figur 1, eine profilierte Innenwandung (31) - als Teil einer einen Werkzeughalter (90) aufnehmenden Ausnehmung (30) - und eine vordere z.B. plane Stirnfläche (124). Die Tiefe des Spanngetriebeabschnitts (21) beträgt bei einem Spindelkopf (20) mit z.B. 22 mm Außendurchmesser 6 mm, während seine mittlere Wandstärke z.B. 4 mm misst. Die Innenwandung (31) endet z.B. vor einer planen Zwischenbodenfläche (28), in der sich eine zylindrische Bohrung (35) anschließt. Diese Bohrung (35) hat hier z.B. einen Durchmesser von 7 mm. Die Tiefe der Bohrung (35) beträgt ca. 4,2 mm. Die Bohrung (35) endet kurz vor einer planen, z.B. ringförmigen Bodenfläche (29) des Schafts (39).

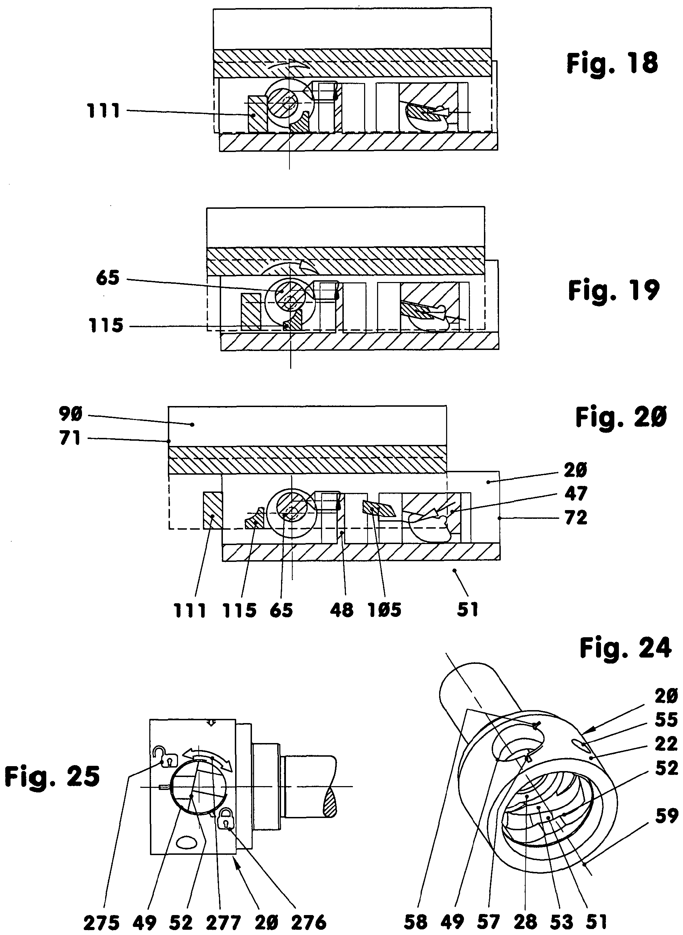

Der Spanngetriebeabschnitt (21) des Spindelkopfes (20) weist zur Aufnahme der Exzenterschraube (60) z.B. eine radiale Gewindebohrung (49) auf, vgl. auch Figur 24. Nach Figur 3 hat die Gewindebohrung (49) z.B. das Feingewinde M 9 x 0,5.

Die Innenwandung (31) basiert auf einer zentralen Bohrung, deren zylindrische Wandung einen Innendurchmesser von z.B. 12 mm misst, vgl. auch Figur 5. Im dritten Quadranten nach Figur 5 befindet sich eine erste Ausfräsung (42), deren Zylindermantel (43) den dritten und zum Teil den vierten Quadranten überdeckt. Ein Quadrant ist ein Begriff aus der Mathematik. Es ist ein durch zwei Koordinatenachsen begrenzter Abschnitt einer Zeichnungsebene. Vier Quadranten überdecken zusammen 360 Winkelgrade, wobei die Nullgradmarkierung im positiven Bereich der Abszisse des Koordinatensystems liegt. Die Winkelgradzählung erfolgt im Gegenuhrzeigersinn.

Die erste Ausfräsung (42) der Innenwandung (31) hat einen Radius von z.B. 4,5 mm. Ihre Mittellinie (45) ist 3 mm von der Mittellinie (59) entfernt. Sie liegt nach Figur 5 auf 255 Winkelgraden im dritten Quadranten. Eine zweite, größere Ausfräsung (46) liegt gegenüber der ersten (42). Sie hat die Form eines sichelförmig gekrümmten Langlochs. Die Mittellinie des Langlochs liegt auf einem Kreis mit einem Radius von 4 mm. Der Bohrungsdurchmesser des Langlochs beträgt 4 mm. Die zweite Ausfräsung (46) überdeckt im Bereich der vollen Langlochbreite z.B. 152 Winkelgrade. Der Startpunkt liegt im vierten Quadranten bei -30 Winkelgraden. Beide Ausfräsungen (42, 46) erstrecken sich parallel zur Mittellinie (59) zwischen der planen Zwischenbodenfläche (28) und dem Außenkonusabschnitt (120). Zwischen dem zweiten und dem dritten Quadranten befindet sich zwischen den Ausfräsungen (42, 46) der Nutstollen (47). Ein weiterer Stollen, der Sperrstollen (48), ist zwischen den Ausfräsungen (46, 42) im vierten Quadranten angeordnet.

Der Freiraum in Umfangsrichtung zwischen dem Nutstollen (47) und Exzenterzapfen (65) im Bereich der zweiten Ausfräsung (46) ist gerade so groß, dass die beiden Stege (111) und (115) mit einem Spiel von wenigen Winkelgraden - unabhängig von der Verdrehposition des Exzenterzapfens (65) - hindurchpassen. Die beiden Stege (111, 115) lassen sich nur in diesen Freiraum einschieben. Alternativ kann der Freiraum, z.B. durch eine Änderung der Ausfräsung (46) und/oder des Exzenterzapfens (65), so verkleinert werden, dass die Stege (111, 115) nur dann in den Freiraum passen, wenn der Exzenter (60) in seiner Offenposition steht.

Im zweiten und dritten Quadranten nach Figur 5 befindet sich zwischen der ersten (42) und der zweiten Ausfräsung (46) eine Haltenut (51), vgl. Figur 24. Die Haltenut (51) hat eine Klemmflanke (52), die oberhalb der Zwischenbodenfläche (28) liegt. Sie ist beispielsweise ein Abschnitt einer Gewindenutflanke, deren Steigungswinkel z.B. 12 Winkelgrade beträgt. Im Ausführungsbeispiel ist sie Teil eines Rechteckgewindes. Sie kann auch Teil eines Trapez-, Sägen-, Rund-, metrischen Gewindes oder dergleichen sein. Die Haltenut (51) überdeckt ca. 60 Winkelgrade des Umfangs der Innenwandung (31). Die maximale Haltenuttiefe beträgt z.B. 2,1 mm. Im Ausführungsbeispiel hat die Haltenut (51) eine nicht belastete Flanke (53), die z.B. 5,4 mm von der Klemmflanke (52) entfernt liegt. Ggf. kann sich die Haltenut (51) ohne die Flanke (53) bis zur Zwischenbodenfläche (28) erstrecken.

Nach Figur 24 ist die Haltenut (51) über die Ausnehmung (30) in den Spindelkopf (20) eingearbeitet, so dass die Außenwandung (22) geschlossen bleibt. Es ist jedoch auch möglich, die Haltenut (51) - von außen her - durch die Außenwandung (22) hindurch zu fertigen.

In die Gewindebohrung (49) des Spanngetriebeabschnitts (21) ist eine entsprechend mit einem Außengewinde ausgestattete Exzenterschraube (60) eingeschraubt. Sie hat ein in die Ausnehmung (30) hineinragendes vorderes Ende, das als Exzenterzapfen (65) ausgebildet ist, vgl. auch Figur 7. Letzterer hat bei einem Durchmesser von z.B. 5,5 mm eine zylindrische Außenfläche. Diese Außenfläche geht im vorderen Bereich tangential in eine ballige Fläche über. Die Außenfläche kann auch z.B. sphärisch gekrümmt sein. Die Exzentrizität des Exzenterzapfens (65) beträgt z.B. 1,35 mm. Die Schwenkachse der Exzenterschraube (60) ist deren Mittellinie (69).

Die exzenterzapfenfreie Stirnseite der Exzenterschraube (60) hat eine Werkzeugausnehmung (67), vgl. Figur 2, mit z.B. einem sechsrund- oder sechskantförmigen Hohlquerschnitt. Zwischen der Werkzeugausnehmung (67) und dem Außengewinde der Exzenterschraube (60) erstreckt sich in radialer Richtung eine z.B. 0,5 mm tiefe Nut (68) oder Kerbe zur Markierung der Position der Exzenterwelle (61).

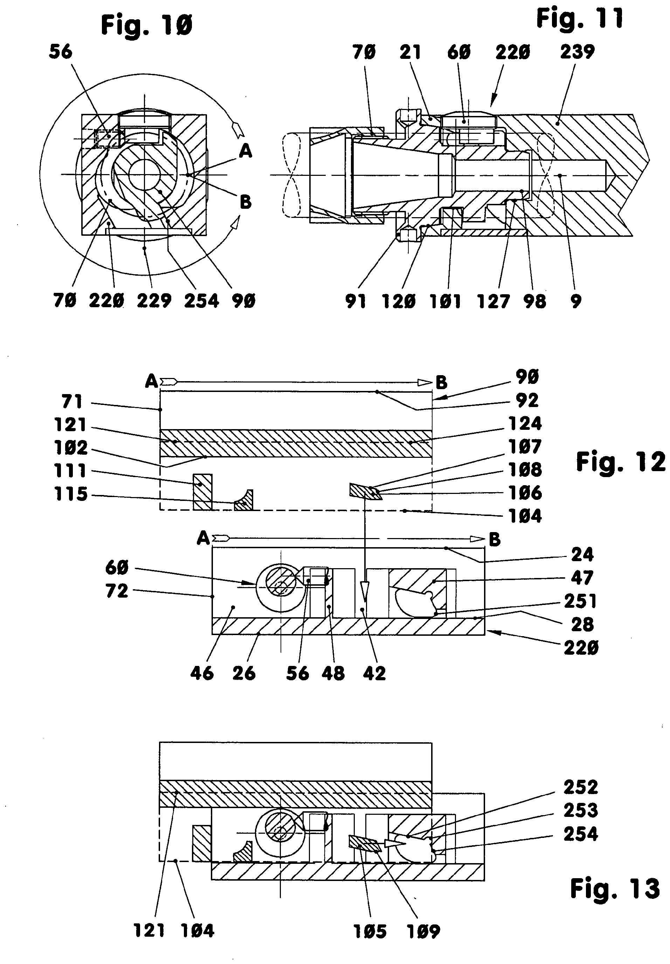

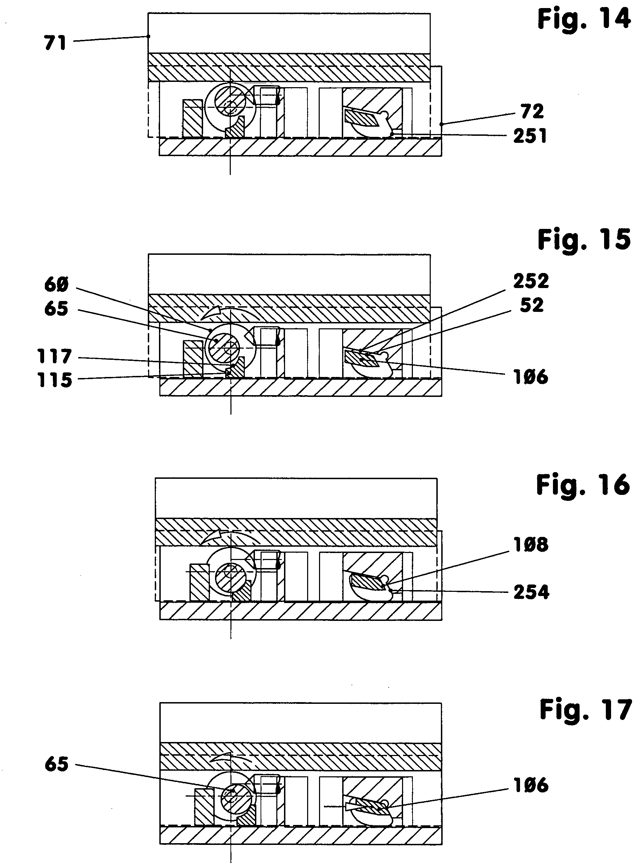

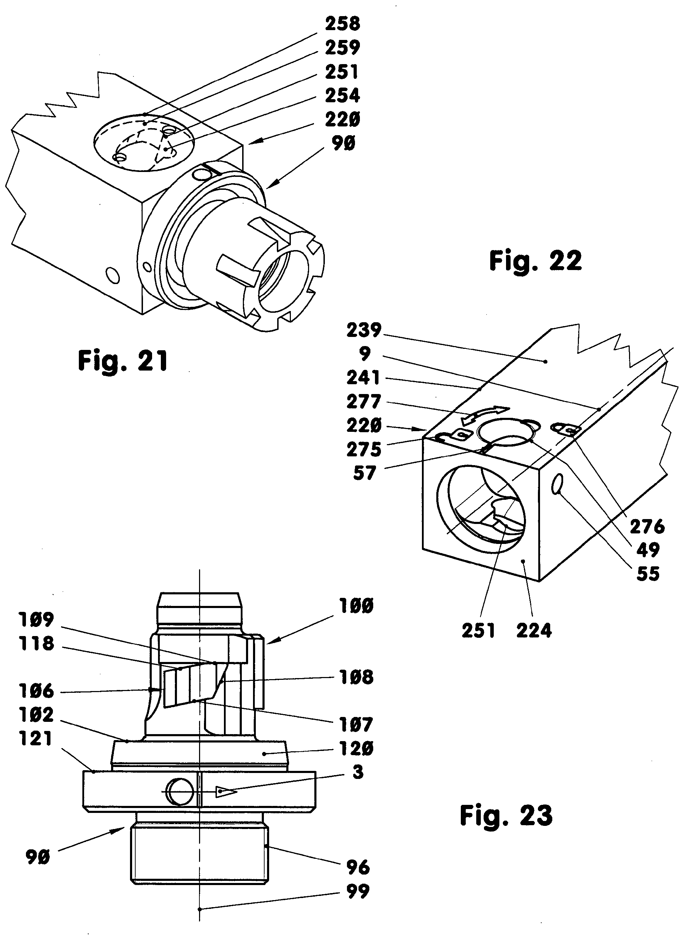

Nach der Figur 22 befindet sich in der Außenwandung (22) des Spindelkopfes (20) eine Gewindebohrung (55), z.B. M3, die einstellbar einen Gewindestift (56) trägt. Der z.B. 4 bis 5 mm lange Gewindestift (56) hat eine in die Ausnehmung (30) hineinragende kegelige Spitze, die als Anschlag für die Exzenterschraube (60) dient. An der Spitze legt sich die zylindrische Außenwandung des Exzenterzapfens (65) an, um die Offenstellung der Exzenterschraube (60) zu definieren, vgl. Figuren 12 und 25. Zugleich kann sich die Exzenterschraube (60) in ihrer Geschlossenstellung am Kegel der Spitze des Gewindestifts (56) anlegen, sofern im Spindelkopf (20) oder im Meißelkopf (220) z.B. keine Werkzeugaufnahme (90) eingesteckt ist, vgl. hierzu Figur 17. In der Geschlossenstellung liegt die Exzenterschraube (60) bei eingestecktem Meißelkopf (220) gerade noch nicht am Gewindestift (56) an.

Die Mittellinie des Gewindestifts (56) tangiert einen um die Mittellinie (9) gedachten Zylinder, der einen Durchmesser von z.B. 11,8 mm aufweist. Diese Gewindestiftmittellinie kreuzt zudem die Mittellinie (69) der Exzenterschraube (60) in einem kürzesten Abstand von 2 mm, wobei die Gewindestiftmittellinie gegenüber der Mittellinie (69) zur Montagefuge (124) hin versetzt angeordnet ist.

Neben dem drehbar gelagerten Spindelkopf (20) zur Aufnahme eines mit oder ohne Werkzeugaufnahme gespannten, rotierenden Werkzeuges, wie z.B. eines Bohrers (140) oder eines Fräsers, gibt es einen Meißelkopf (220), vgl. 10, 11, 21 und 22. Der Meißelkopf (220) ist in der Regel der vordere Bereich eines als statischer Halter dienenden Meißels. Er bildet das vordere Ende eines Meißelschaftes (239). Der Meißel (220, 239) selbst ist über den Meißelschaft (239) in der entsprechenden Bearbeitungsmaschine drehfest eingespannt. Das Werkzeug des Meißels (220, 239), z.B. eine Wendeschneidplatte, ist über einen Adapter in dem z.B. aus Figur 6 und 23 bekannten Werkzeughalter (90) gelagert, der wiederum in den Meißelkopf (220) eingespannt wird.

Der Meißelkopf (220) hat z.B. die Form eines Vierkantes, mit quadratischem Querschnitt, in dessen Zentrum die Mittellinie (9) liegt. Die Mittellinie (9) verläuft z.B. parallel zu den Längskanten (241) des Meißelschaftes (239). Die Kantenlänge des Meißelkopfquerschnitts beträgt z.B. 16 mm.

Seine zur Mittellinie (9) senkrecht ausgerichtete Stirnfläche (224) entspricht der Stirnfläche (24) des Spindelkopfs (20). Auch seine Ausnehmung (30) weist weitgehend dieselbe Innengeometrie auf wie bei der entsprechenden Bohrung des Spindelkopfes (20). Allerdings befindet sich im Bereich des Nutstollens (47) der Wandung des Meißelkopfes (220) eine seitliche Halteausnehmung (251), die die Bohrung mit der Außenwandung verbindet. Die Halteausnehmung (251) ersetzt im Meißelkopf (220) die aus dem Spindelkopf (20) bekannte Haltenut (51).

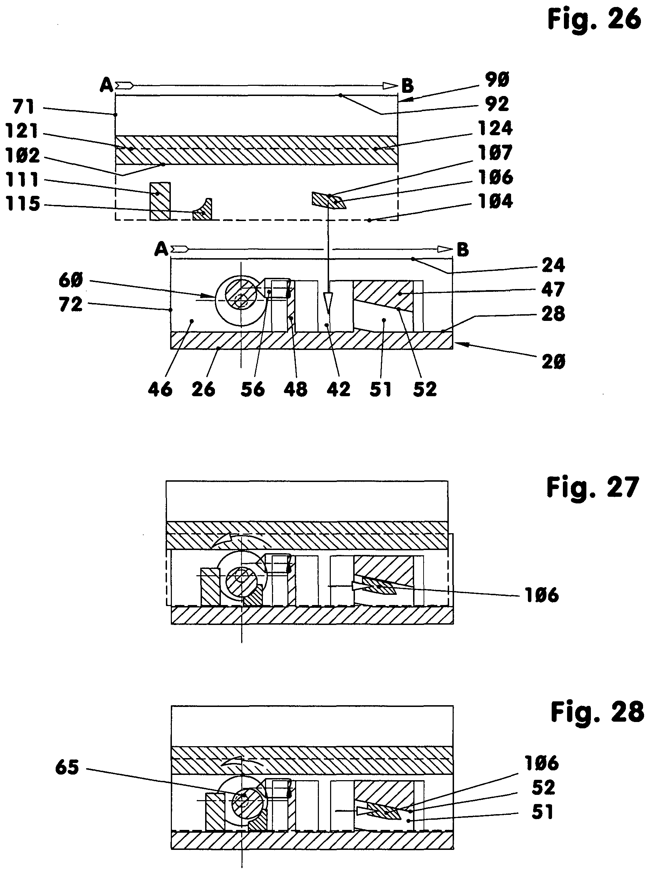

Die Halteausnehmung (251), die im Querschnitt annähernd die Form eines Parallelogramms mit abgerundeten Eckbereichen hat, ist nach Figur 10 unter einem Winkel von z.B. 28,2 Winkelgraden gegenüber der dortigen Mittenlängsebene (229) in die Wandung des Meißelkopfes (220) eingearbeitet. Sie hat zumindest zwei größere plane Wandungsabschnitte. Der z.B. größere Wandungsabschnitt, der parallel zur Klemmflanke (52) der Haltenut (51) ausgerichtet ist, ist die Sicherungsflanke (252), vgl. Figur 13. Die von ihr aufgespannte Ebene ist gegenüber der Ebene der Klemmflanke (52) aus Figur 27 um z.B. 0,2 mm zur Stirnfläche (224) hin versetzt.

Nach Figur 13 schließt an die Sicherungsflanke (252) eine Steilklemmflanke (254) an. Sie ist von Letzterer durch eine Kantenausrundung (253) getrennt. Die Kantenausrundung (253) ist beispielsweise ein Bereich einer Zylinderwandung eines Zylinders , dessen Durchmesser z.B. 2 mm beträgt. Sie ermöglicht den ebenen Auslauf der Flanken (252) und (254).

Die Orientierung der Steilklemmflanke (254) gegenüber dem Meißel (220, 239) wird mit Hilfe der sie kontaktierenden Steilflanke (108) des Werkzeughalters (90) erläutert. Bei eingesetztem Werkzeughalter (90) ist dessen Mittellinie (99) deckungsgleich mit der Mittellinie (9).

Nach Figur 29, vgl. zweites Figurenblatt, schließt die Steilflanke (108) mit der Mittellinie (99) oder einer Hilfsebene (285) einen Winkel von z.B. 10 bis 40 Winkelgraden ein. Im Ausführungsbeispiel beträgt der Winkel 23,5 Winkelgrade. Die Hilfsebene (285) wird durch zwei Geraden (281, 282) gebildet. Die erste Gerade (281) durchquert den Flächenschwerpunkt (280) der zumindest bereichsweise ebenen Steilflanke (108). Sie liegt in der Ebene der Steilflanke (108) und zugleich in einer Querschnittsebene (286), die normal zur Mittellinie (99) ausgerichtet ist. Die Gerade (281) schneidet die Mittellinie (99) oder kreuzt sie in einem Abstand (288) von maximal einem Millimeter, vgl. Figur 29. Die zweite Gerade (282) ist eine Parallele zur Mittellinie (99).

Außerhalb des Flächenschwerpunkts (280) kann die Steilflanke (108) und/oder ihre gegenüberliegende Steilklemmflanke (254) ballig ausgeführt sein.

Die Halteausnehmung (251) mündet in eine Vertiefung (258) mit kreisrundem Querschnitt. Die Vertiefung (258) dient der Aufnahme eines z.B. eingeschraubten, verstemmten oder eingeklemmten Deckels (259). Die ebene Außenseite des Deckels (259) liegt bei montiertem Deckel z.B. 0,2 mm unterhalb der Außenwandung des Meißelkopfs (220), vgl. Figur 21.

Auf der der Vertiefung (258) gegenüberliegenden Seite des Meißelkopfes (220) befindet sich die Gewindebohrung (49), in der die Exzenterschraube (60) verdrehbar gelagert ist. Die Gewindebohrung (49) wird von drei Symbolen umgeben. Das erste Symbol (277) ist ein Pfeil mit zwei Spitzen, der zwischen zwei Vorhängeschlosssymbolen (275, 276) angeordnet ist. Das Symbol (276) mit dem geschlossenen Schloss definiert die Geschlossenstellung der Exzenterschraube (60). Die Offenstellung wird durch das Symbol (275) markiert. Der Pfeil (277) steht für den zwischen den Symbolen (275) und (276) liegenden Schwenkbereich.

In der Ausnehmung (30) des Spindelkopfes (20) steckt der Werkzeughalter (90). Letzterer hat einen Flanschabschnitt (91), vgl. Figur 2 und 3, an dem ein Zapfen (100) angeformt ist. Dieser Zapfen (100) umfasst einen Außenkonusabschnitt (120), einen Verriegelungsabschnitt (101) und einen Endabschnitt (127). Der z.B. nahezu scheibenförmige Flanschabschnitt (91) hat hier eine zylindrische Außenfläche, deren Durchmesser z.B. geringfügig kleiner ist als der benachbarte Außendurchmesser des Spindelkopfes (20). Vorn hat der Flanschabschnitt (91) z.B. eine plane Stirnfläche (92), in deren Mitte eine Ausnehmung (95) zur Aufnahme einer Spannzange (130), eines anderen werkzeughaltenden Bauteils oder eines Werkzeugs selbst angeordnet ist. Hinten endet der Flanschabschnitt (91) in einer als plane Bundfläche ausgebildeten Anlagefläche (121).

Der Zapfen (100) weist zudem zwei einander gegenüberliegende Zapfenplanflächen (128) auf, vgl. Figuren 1 und 2, die zudem parallel zueinander ausgerichtet sind. An den Planflächen kann der Werkzeughalter (90) z.B. in einem Schraubstock eingespannt werden, um die werkzeugklemmende Spannschraubhülse (137) der Spannzange (130) beschädigungsfrei lösen zu können.

Die Außenfläche des Flanschabschnittes (91) weist in der Nähe der Bundfläche (121), vgl. Figur 1, eine Markierungsnut (122) auf.

Die Spannzangenausnehmung (95) in der Stirnfläche (92) umfasst im Wesentlichen einen Außengewindeabschnitt (96) und einen Innenkonusabschnitt (97). Der z.B. 6 mm lange Außengewindeabschnitt (96) weist z.B. das Feingewinde M13 x 0,75 auf, vgl. Figur 23, vgl. ggf. auch DIN ISO 15488. Der Innenkonusabschnitt (97) hat bei einem maximalen Innendurchmesser von 11 mm einen Kegelwinkel von z.B. 16 Winkelgraden, vgl. Figur 3. Er ist 14 mm tief. Er mündet in eine zentrale, z.B. 5,1 mm lange Durchgangsbohrung (98), die zumindest bereichsweise ein M6-Innengewinde aufweist.

Die Rückseite des Flanschabschnittes (91) weist z.B. die plane Stirnfläche (121) auf, die als Anlagefläche zur Kontaktierung des Spindelkopfes (20) oder des Meißelkopfes (220) dient. Möglicherweise können die zueinander passend bearbeiteten Stirnflächen (24) und (121) kegelstumpfmantelförmig oder sphärisch gekrümmt ausgeführt sein. Der Kegelwinkel läge dann zwischen 170 und 190 Winkelgraden, während der Krümmungsradius größer 200 mm wäre.

Dem Flanschabschnitt (91) ist der Außenkonusabschnitt (120) nachgeschaltet. Letzterer kommt bei eingewechseltem Werkzeughalter (90) mit dem kegelstumpfmantelförmigen Abschnitt (32) des Spindel- (20) oder Meißelkopfes (220) in einen großflächigen Kontakt. Die Kontaktfläche wird als erste Montagefuge (124) definiert. Diese Montagefuge (124) kann ggf. auch die Form eines Zylindermantels haben. In der Schnittstelle liegt gleichzeitig die Bundfläche (121) des Werkzeughalters (90) an der vorderen Stirnfläche (24) des Spindelkopfes (20) ebenfalls, z.B. großflächig, an. Die dabei entstehende Kontaktfläche wird als zweite Montagefuge (94) bezeichnet.

Ggf. kann hier jeweils eine Anlagefläche auf eine oder mehrere punktuelle oder linienartige Kontaktstellen treffen. In diesem Fall hat beispielsweise der Spindel- (20) oder Meißelkopf (220) die plane Stirnfläche (24), während der Flanschabschnitt (91) des Werkzeughalters (90) z.B. eine einzelne Kontaktstelle aufweist. Selbstverständlich kann auch am Spindelkopf (20) die z.B. punktuelle Kontaktstelle und am Werkzeughalter (90) die vollflächige Bundfläche (121) sein.

An den Außenkonusabschnitt (120) schließt sich der Verriegelungsabschnitt (101) über die plane Bundfläche (121) an, vgl. auch Figuren 2 und 4. Der Verriegelungsabschnitt (101) ist auf einem Grundzylinder (103), der nur beispielsweise eine zylindrische Grundform hat, aufgebaut. Der Grundzylinder (103) hat beispielsweise eine Länge von 10,5 mm und einen Durchmesser von 10,53 mm. Er endet in einer ebenen Bodenfläche (104). Am Grundzylinder (103) sind ein Bayonettelement (106), ein Auswurfsteg (111) und ein Schließsteg (115) angeformt oder befestigt.

Die Kopfflächen des Bayonettelements (106), des Auswurfstegs (111) und des Schließstegs (115) liegen auf einem Hüllzylinder (105), dessen Durchmesser z.B. 15,6 mm beträgt, vgl. Figur 4. Im Bereich zwischen der Außenwandung des Grundzylinders (103) und des Hüllzylinders (105) liegt ein als Teilzylinder (70) bezeichneter, gedachter Zylinder, vgl. Figuren 10 und 11. Sein Durchmesser beträgt z.B. 14 mm.

Der Teilzylinder (70) ist in den Figuren 12 bis 20 in abgewickelter Form als Teil des Meißelkopfs (220) und des Werkzeughalters (90) dargestellt. In den Figuren 26 bis 28 wird er in abgewickelter Form als Teil des Spindelkopfs (20) gezeigt.

Das Bajonettelement (106) ist beispielsweise ein Abschnitt eines Gewindestegs. Das im Ausführungsbeispiel gezeigte Bajonettelement (106) ist Teil eines Rechteckgewindes. Es kann auch Teil eines Trapez-, Säge-, Rund-, metrischen Gewindes oder dergleichen sein. Das Bajonettelement (106) überdeckt im Mittel 34 Winkelgrade des Teilzylinderumfanges. Die Stegbreite beträgt 2,25 mm, während die Steghöhe 3,5 mm misst. Die Mitte bzw. der Schwerpunkt des Bajonettelements (106) ist ca. 4,9 mm von der Bodenfläche (104) entfernt.

Ggf. kann das Bajonettelement (106) auch als plattenartiger Steg gestaltet sein, dessen axial orientierte Flächen eben und nicht wendelförmig geformt sind. In diesem Fall wäre die Klemmflanke (52) durch eine ballig, z.B. sphärisch, gekrümmte Kontaktfläche zu ersetzen.

Das Bajonettelement (106), vgl. Figur 23, hat zwei einander gegenüberliegende Flanken (107, 118), die Klemmflanke (107) und die Rückflanke (118), von denen die Klemmflanke (107) für den zumindest hilfsweisen Hintergriff im Spindel- (20) oder Meißelkopf (220) verwendet wird. Beim Fixieren des Werkzeughalters (90) im Meißelkopf (220) hat die Klemmflanke (107) als Teil eines Bajonettverschlusses keine Funktion. Die Klemmflanke (107) kontaktiert höchstens beim Lösen des Werkzeughalters (90) in der in Figur 19 dargestellten Phase den Meißelkopf (220). Sie verhindert das Herausfallen des Werkzeugs nach dem Lösen.

Die Rückflanke (118) geht - in Schwenkschließrichtung (3) - in eine Abflachung (109) über. Letztere ist parallel zur Stirnfläche (102) orientiert. Sie liegt von der Stirnfläche (102) z.B. 7,7 mm entfernt. Zwischen der Abflachung (109) und der Klemmflanke (107) liegt die Steilflanke (108), über die das Bajonettelement (106) des Werkzeughalters (90) an der Steilklemmflanke (254) des Meißelkopfs (220) zur Anlage kommt.

Nach Figur 4 befindet sich im Gegenuhrzeigersinn, um ca. 120 Winkelgrade versetzt, der Auswurfsteg (111). Er hat - von der Zapfenplanfläche (128) aus gemessen - eine Breite von 3,9 mm. Seine Höhe beträgt 7,3 mm. Die untere Stirnfläche des Auswurfstegs (111) endet an der Bodenfläche (104). In der Seitenansicht, vgl. Figur 6, hat er beispielsweise eine rechteckige Außenkontur.

Um weitere ca. 60 Winkelgrade im Gegenuhrzeigersinn versetzt, ist der Schließsteg (115) positioniert. Letzterer hat bei einer maximalen Breite von 2,25 mm eine maximale Höhe von 4,2 mm. Auch seine untere Stirnfläche endet an der Bodenfläche (104), vgl. Figur 6. Der Schließsteg (115) und der Auswurfsteg (111) haben zwei einander gegenüberliegende plane Seitenflächen (116, 112), die zueinander parallele Ebenen bilden, vgl. auch Figur 6. Die Seitenfläche (116) des Schließstegs (115) ist von einer nach Figur 6 horizontalen Mittenlängsebene (5) 1 mm entfernt, während der Abstand zwischen der Mittenlängsebene (5) und der Seitenfläche (112) des Auswurfstegs (111) 3 mm beträgt. Zwischen den Seitenflächen (112, 116) befindet sich eine Planfläche (113), die parallel zur Mittellinie (99) und senkrecht zu den Seitenflächen (112, 116) orientiert ist. Sie hat zur Mittenlängsebene (6), vgl. Figur 4, einen Abstand von z.B. 4,9 mm.

In den Schließsteg (115) ist eine Ausrundung (117) eingearbeitet, die einen Radius von 4,1 mm hat. Die senkrecht zur Zeichnungsebene der Figur 6 ausgerichtete Mittellinie (119) der Ausrundung (117) ist von der Bodenfläche (104) 5,65 mm entfernt. Zugleich liegt sie 0,45 mm oberhalb der Mittenlängsebene (5).

Der Endabschnitt (127) ist ein im Wesentlichen zylindrischer Abschnitt, der in einer 1,3 x 30°-Fase endet. In axialer Richtung ist zwischen dem Endabschnitt (127) und der Bodenfläche (29) ein Spiel von z.B. 0,2 mm.

In den Figuren 1 und 2 sind der Spindelkopf (20) und der Werkzeughalter (90) in einer Explosionszeichnung dargestellt. Der Spindelkopf (20) und der Werkzeughalter (90) sind dabei nur linear auseinandergezogen. Eine für das Trennen des Werkzeughalters (90) vom Spindelkopf (20) erforderliche Drehung um die Mittellinie (9) ist nicht dargestellt.

Die Figuren 10 und 11 zeigen die aus dem Meißelkopf (220) und dem Werkzeughalter (90) bestehende Schnittstelle im Längs- und Querschnitt. Im Querschnitt, vgl. Figur 10, ist strichpunktiert der Teilzylinder (70) dargestellt. Der Teilzylinder (70) wird von den erhabenen, radial nach innen ragenden Teilen der Innenwandung (31) des Spindelkopfes (20) und den radial nach außen abstehenden Teilen (106, 111, 115) des Werkzeughalters (90) durchdrungen.

Wird von der Mittellinie (9) aus durch den Teilzylinder (70) nach außen geschaut und dieses zylindrische Abbild zu einem ebenen Bild abgewickelt, so entsteht eine Werkzeugaufnahmeabwicklung. Letztere wird als innere Abwicklung (71) bezeichnet. Wird umgekehrt von außen in Richtung der Mittellinie (9) auf den Teilzylinder (70) geblickt und das zylindrische Abbild hiervon zu einem ebenen Bild abgerollt, so entsteht eine Meißel- bzw. Spindelkopfabwicklung. Sie wird als äußere Abwicklung (72) bezeichnet. Der Anfang (A), das Ende (B) und die Richtung der Abwicklungen (71, 72) sind in den Figuren 12 und 13 dargestellt.

In den Figuren 12 bis 20 sind die beiden Abwicklungspaare (71, 72) jeweils in zueinander unterschiedlichen Positionen gezeigt, um den Vorgang des Herstellens der Schnittstelle erläutern zu können.

Nach der Figur 12 liegen die beiden ebenen Abwicklungen (71) und (72) noch voneinander getrennt vor. Der Werkzeughalter (90) ist noch nicht in den Spindelkopf (20) eingeführt. In der Abwicklung (71) sind unterhalb der gestrichelt gezeichneten Montagefuge (124) im Schnitt der Auswurfsteg (111), der Schließsteg (115) und das Bajonettelement (106) zu erkennen. Die Teile (115, 111) liegen an der als Strich dargestellten Bodenfläche (104) an. In der Abwicklung (72) sind zwischen der äußeren Stirnfläche (24) und der Zwischenbodenfläche (28) die Exzenterschraube (60), der Nutstollen (47) und der Sperrstollen (48) zu erkennen. Im Nutstollen (47) befindet sich die Haltenut (51) mit ihrer Klemmflanke (52).

In Figur 12 ist die Abwicklung (71) so vor der Abwicklung (72) positioniert, dass sich das Bajonettelement (106) der Abwicklung (71) ca. mittig vor der ersten Ausfräsung (42) befindet.

Gemäß Figur 13 ist der Werkzeughalter (90) linear in den Meißelkopf (220) eingeschoben. Die hintere Bundfläche (121) kommt an der Stirnfläche (24) zur Anlage. Das Bajonettelement (106) befindet sich in der ersten Ausfräsung (42). Wird nun der Werkzeughalter (90) über eine Rechtsdrehung im Meißelkopf (220) bewegt, wird das Bajonettelement (106) unter die Sicherungsflanke (252) geschoben, vgl. Figur 14.

In Figur 15 wird die Exzenterschraube (60) in einer Rechtsdrehung um 90 Winkelgrade geschwenkt, so dass der Exzenterzapfen (65) - hier nach links - auswandert. Da in Figur 15 die Rechtsdrehung von der Rückseite aus erfolgt, erscheint sie in dieser Figur als Gegenuhrzeigerdrehung.

Gemäß Figur 16 legt sich nach einer weiteren Rechtsdrehung - um ca. 90 Winkelgrade - die Exzenterschraube (60) an der Ausrundung (117) des Schließstegs (115) an und schiebt zugleich das Bajonettelement (106) weiter unter die Sicherungsflanke (252) in Richtung der Steilklemmflanke (254).

Nach einem Weiterdrehen der Exzenterschraube (60) um ca. 45 Winkelgrade hat sich das Bajonettelement (106) mit seiner Steilflanke (108) an der Steilklemmflanke (254) der Halteausnehmung (251) angelegt, ohne dass die Klemmflanke (52) die Sicherungsflanke (252) kontaktiert, vgl. Figur 17. Nun ist der Werkzeughalter (90) im Meißelkopf (220) an zwei einander fast gegenüberliegenden Punkten bzw. Linien oder Flächen festgeklemmt. Zum einen zieht das an der Steilklemmflanke (254) anliegende Bajonettelement (106) die hintere Bundfläche (121) gegen die Stirnfläche (24) des Meißelkopfes (220). Zum anderen ergibt sich eine vergleichbare Klemmwirkung durch die Anlage des Exzenterzapfens (65) am Schließsteg (115).

Zum Lösen des Werkzeughalters (90) wird die Exzenterschraube (60) von der Rückseite aus mit einer Linksdrehung bewegt, vgl. Figur 18. Hier ist die Bewegung eine Drehung im Uhrzeigerdrehsinn. Nach ca. 100 Winkelgraden kontaktiert der Exzenterzapfen (65) den Auswurfsteg (111). Durch die Linksverschiebung der Abwicklung (71) wird das Bajonettelement (106) von der Steilklemmflanke (254) der Halteausnehmung (251) gelöst.

Wird nun unter einem axialen Zug nach oben der Werkzeughalter (90) in einer Linksdrehung weitergeschwenkt, stößt der Schließsteg (115) am z.B. komplett zurückgeschwenkten Exzenterzapfen (65) an, bevor das Bajonettelement (106) den Bereich der Halteausnehmung (251) vollständig verlassen hat. Der Werkzeughalter (90) befindet sich hier in einer mit Spiel behafteten Sperrlage, vgl. Figur 19. Würde der Werkzeughalter (90) beispielsweise über Kopf in einem vertikal positionierten, unten offenen Meißelkopf (220) montiert sein, könnte er trotz des Lösens der Klemmung nicht aus dem Meißelkopf (220) herausfallen.

Erst nach einer Weiterdrehung des Werkzeughalters (90) unter gleichzeitigem axialen Hineinschieben in den Spindelkopf (20) ist ein Herausziehen aus dem Meißelkopf (220) möglich, vgl. Figur 20. Sobald sich das Bajonettelement (106) zwischen den beiden Stollen (47) und (48) befindet, liegen auch die Stege (111) und (115) zwischen dem Nutstollen (47) und dem Exzenterzapfen (65). Nun kann der Werkzeughalter (90) problemlos herausgehoben werden.

Die Figuren 26 bis 28 zeigen die aus dem Spindelkopf (20) und dem Werkzeughalter (90) bestehende Schnittstelle als die Abwicklungspaare (71, 72). Die Figur 26 ist vergleichbar mit Figur 12. Hier wird der Werkzeughalter (90) vor der Abwicklung des Spindelkopfs (20) positioniert. Der Spindelkopf (20) hat im Gegensatz zum Meißelkopf (220) keine Halteausnehmung (251) mit einer Steilklemmflanke (254), sondern eine Haltenut (51) mit einer Klemmflanke (52), vgl. Figuren 24 und 26. Eine Steilklemmflanke (254) gibt es im Spindelkopf (20) nicht.

Die Figur 27 entspricht der Figur 16. Hier schiebt die Exzenterschraube (60) durch ihre Rechtsdrehung das Bajonettelement (106) weiter in die Haltenut (51). Nach einem Weiterdrehen der Exzenterschraube (60) um ca. 45 Winkelgrade hat sich das Bajonettelement (106) mit seiner Klemmflanke (107) an der Klemmflanke (52) der Haltenut (51) angelegt, vgl. Figur 28. Nun ist der Werkzeughalter (90) fest im Spindelkopf (20).

Um den Werkzeughalter (90) im Spindel- oder Meißelkopf (20, 220) festklemmen bzw. kuppeln zu können, wird er vor dem Einführen zuerst so positioniert, dass seine Markierungsnut (122), vgl. Figur (1), gegenüber der Markierungsnut (57) des Spindel- (20) oder Meißelkopfes (220), vgl. Figur 22 oder 24, angeordnet ist. Hiernach wird er in einer geradlinigen Bewegung in den Spindel- (20) oder Meißelkopf (220) eingesteckt. Sobald in axialer Richtung ein Widerstand spürbar ist, wird der Werkzeughalter (90) um ca. 65 bis 75 Winkelgrade nach rechts geschwenkt, sodass das Bajonettelement (106) in die Haltenut (51) oder die Halteausnehmung (251) einschwenkt. Somit ist beim Klemmen bzw. Kuppeln mindestens einer der Stege (106, 115) an mindestens einem Hintergriff der Ausnehmung (30) zur Anlage bringbar.

In einem abschließenden Schritt wird die Exzenterschraube (60) mit Hilfe eines Drehmomentschlüssels um z.B. 225 Winkelgrade in einer Rechtsdrehung geschwenkt. Als maximales Drehmoment werden z.B. 10 Nm gewählt. Während ihrer axialen Zustellbewegung legt sich der Exzenterzapfen (65) am Schließsteg (115) an und verschwenkt hierbei den Werkzeughalter (90) noch um einige Winkelgrade oder Winkelminuten weiter. Der Exzenterzapfen (65) schiebt das Bajonettelement (106) tiefer in die Haltenut (51) oder die Halteausnehmung (251) hinein. Gleichzeitig drückt der Exzenterzapfen (65) durch seine Anlage am Schließsteg (115) über diesen ebenfalls den Werkzeughalter (90) in die Montagefugen (94) und (124). Da das Feingewinde der Exzenterschraube (60) aufgrund seiner großen Kontaktfläche im Gewindegang und aufgrund seiner geringen Gewindesteigung selbsthemmend in der Bohrung (49) sitzt, behält die Exzenterschraube (60) ihre Position.

Da sich der Werkzeughalter im Meißelkopf (220) an einer der mit einer großen Steigung ausgestatteten Steilklemmflanke (254) anlegt, dreht sich der Werkzeughalter zwischen der ersten Anlage an der Steilklemmflanke (254) und dem endgültigen Festsitzen an diese nur wenige Winkelsekunden. Auf diese Weise ergibt sich eine wiederholgenaue Endlage des Werkzeugs und/oder des Werkzeughalters gegenüber dem Meißel (220, 239) .

Die eng tolerierte Anlage des werkzeughalterseitigen Endabschnitts (127) in der Bohrung (35) des Meißel- (220) oder des Spindelkopfes (20) unterstützt zudem eine gleichförmige, verkantungsfreie Anlage der Bauteile (220; 20, 90) in den Montagefugen (94) und (124). Der Werkzeughalter (90) sitzt nun spielfrei und wiederholgenau im Spindel- (20) oder Meißelkopf (220).

Der Werkzeughalter (90) kann auch weg- bzw. winkelgesteuert oder geregelt im Spindel- (20) oder Meißelkopf (220) festgeklemmt werden. Dazu wird die Exzenterschraube (60), deren Markierungsnut (68), anfangs vor der mittellinienparallelen Markierungsnut (57) des Spindel- (20) oder Meißelkopfs (220) liegt, in einer Rechtsdrehung vor die andere Markierungsnut (58) des Spindel- (20) oder Meißelkopfs (220) geschwenkt.

### Bezugszeichenliste:

- 3: Schwenkschließrichtung, Umfangsrichtung
- 5: Mittenlängsebene zwischen (111) und (115)
- 6: Mittenlängsebene, senkrecht zu (5)
- 9: Mittellinie der Schnittstelle

- 10: Gehäuse des Werkzeugaggregats
- 11: Schulterkugellager
- 12: Spindel
- 13: Deckel
- 16: Ringnut
- 17: Dichtring, O-Ring

- 20: Spindelkopf, erste Baugruppe
- 21: Spanngetriebeabschnitt
- 22: Außenwandung

- 24: Stirnfläche; Anlagefläche, Kontaktstelle
- 25: Spindelkopfschulter
- 26: Bundfläche, plan, rückseitig
- 28: Zwischenbodenfläche
- 29: Bodenfläche, innen

- 30: Ausnehmung, zentral
- 31: Innenwandung, profiliert
- 32: Abschnitt, kegelstumpfmantelförmig, Innenkonus
- 35: Bohrung, Zentrierbohrung
- 39: Schaft

- 42: erste Ausfräsung
- 43: Zylindermantel
- 45: Mittellinie
- 46: zweite Ausfräsung; Langloch
- 47: Nutstollen
- 48: Sperrstollen
- 49: Gewindebohrung für (60)

- 51: Haltenut
- 52: Klemmflanke von (51), Hintergriff
- 53: Flanke, unbelastet

- 55: Gewindebohrung für (56)
- 56: Gewindestift, Anschlagstift
- 57: Markierungsnut für Offenstellung, Markierung
- 58: Markierungsnut für Schließstellung, Markierung
- 59: Mittellinie

- 60: Exzenterschraube, Spannelement
- 61: Exzenterwelle mit Außengewinde
- 65: Exzenterzapfen, Zapfen
- 66: Mittellinie von (65)
- 67: Werkzeugausnehmung, Innensechsrund
- 68: Markierungsnut an (60), Markierung
- 69: Mittellinie von (60)

- 70: Teilzylinder
- 71: Abwicklung der Werkzeugaufnahme
- 72: Abwicklung des Spindelkopfes

- 90: Werkzeughalter, zweite Baugruppe, Werkzeugaufnahme
- 91: Flanschabschnitt
- 92: Stirnfläche, vorn
- 94: Montagefuge, zweite
- 95: Ausnehmung, Spannzangenausnehmung
- 96: Außengewindeabschnitt
- 97: Innenkonusabschnitt
- 98: Durchgangsbohrung
- 99: Mittellinie

- 100: Zapfen
- 101: Verriegelungsabschnitt
- 102: Stirnfläche, plan
- 103: Grundzylinder
- 104: Bodenfläche
- 105: Hüllzylinder
- 106: Bayonettelement, Steg, Gewindeabschnitt
- 107: Klemmflanke von (106), erste Klemmflanke
- 108: Steilflanke von (106)
- 109: Abflachung

- 111: Auswurfsteg, Steg
- 112: Seitenfläche
- 113: Planfläche zwischen (112) und (116)
- 115: Schließsteg, Steg
- 116: Seitenfläche
- 117: Ausrundung
- 118: Rückflanke
- 119: Mittellinie

- 120: Außenkonusabschnitt; Abschnitt, kegelstumpfförmig
- 121: Anlagefläche, Bundfläche, Stirnfläche, plan
- 122: Markierungsnut an (91)
- 124: Montagefuge, erste; Stirnfläche, vorn
- 127: Endabschnitt, zylindrischer Bolzen
- 128: Zapfenplanflächen

- 130: Spannzange
- 137: Spannschraubhülse
- 138: Innengewinde
- 140: Werkzeug; Spiralbohrer, z.B. innengekühlt

- 220: Meißelkopf, erste Baugruppe, statischer Halter Meißel
- 224: Stirnfläche; Anlagefläche, Kontaktstelle
- 229: Mittenlängsebene
- 239: Meißelschaft, Meißel
- 241: Längskanten

- 251: Halteausnehmung
- 252: Sicherungsflanke, Wandungsabschnitt
- 253: Kantenausrundung
- 254: Steilklemmflanke, zweite Klemmflanke, Wandungsabschnitt
- 258: Vertiefung
- 259: Deckel

- 275: Symbol für Offenstellung, Markierung
- 276: Symbol für Schließstellung, Markierung
- 277: Pfeil

- 280: Flächenschwerpunkt von (108)
- 281: Gerade durch (280) in (285) und (286)
- 282: Gerade, parallel zu (99) in (285)
- 285: Hilfsebene
- 286: Querschnittsebene
- 288: Abstand zwischen (99) und (285)

## Patentansprüche

1. Schnittstelle aus einer ersten - ein Werkzeug oder einen Werkzeughalter haltende - Baugruppe (20, 220) und einer zweiten - ein Bearbeitungselement tragende - Baugruppe (90) für rotierende oder statische Bearbeitung,
- wobei die erste Baugruppe (20, 220) - als Teil einer rotierbaren Spindel (12) oder Teil eines Meißels (220, 239) - zum einen eine Ausnehmung (30) besitzt, die mindestens einen kegelstumpfmantel- oder zylinderförmigen Abschnitt (32) hat und zum anderen eine in axialer Richtung - in Richtung der zweiten Baugruppe (90) - wirkende Anlagefläche (24, 224) oder Kontaktstelle aufweist und
- wobei die zweite Baugruppe (90) einen Zapfen (100) hat, der zum einen einen kegel-, kegelstumpf- oder zylinderförmigen Abschnitt (120) zur Anlage am kegelstumpfmantel- oder zylinderförmigen Abschnitt (32) der ersten Baugruppe (20, 220) besitzt und zum anderen mindestens eine in axialer Richtung wirkende Kontaktstelle oder Anlagefläche (121) zur Kontaktierung der Anlagefläche (24, 224) oder Kontaktstelle der ersten Baugruppe (20, 220) aufweist, wobei zwischen der Ausnehmung (30) der ersten Baugruppe (20, 220) und dem Zapfen (100) der zweiten Baugruppe (90) ein bajonettartiger Verschluss mit mindestens einem - am Zapfen (100) vorhandenen - Steg (106, 115) angeordnet ist, und wobei in der ersten Baugruppe (20, 220) ein Spannelement (60) angeordnet ist, dessen vorderes Ende beim Spannen an mindestens einem Steg (105, 115) zur Anlage kommt, **dadurch gekennzeichnet,**
- **dass** der Steg (106) des bajonettartigen Verschlusses - für das Klemmen in einen Spindelkopf (20) der Spindel (12) eine erste Klemmflanke (107) hat, deren Steigungswinkel kleiner ist als 30 Winkelgrade,
- dass der Steg (106) des bajonettartigen Verschlusses - für das Klemmen im Meißelkopf (220) des Meißels (220, 239) - eine zweite Klemmflanke (254) hat, deren Steigungswinkel im Bereich von 50 - 80 Winkelgraden liegt.

2. Schnittstelle gemäß Anspruch 1, **dadurch gekennzeichnet, dass** beide Klemmflanken (107, 254) des Steges (106) Flächennormale aufweisen, die jeweils eine Vektorkomponente haben, die bezogen auf die Mittellinie der zweiten Baugruppe (90) zumindest annähernd in die Umfangsrichtung (3) orientiert sind, in der die Baugruppe (90) zum Klemmen geschwenkt wird.

3. Schnittstelle gemäß Anspruch 1, **dadurch gekennzeichnet, dass** mindestens einer der Stege (106, 115) ein gewindeabschnittförmiges Bajonettelement ist, dessen Steigungswinkel bei 12 ± 2 Winkelgraden liegt und das eine Länge hat, die 10 bis 60 Winkelgrade des 360 Winkelgradumlaufes überdeckt.

4. Schnittstelle gemäß Anspruch 3, **dadurch gekennzeichnet, dass** das Bajonettelement (106) rechtssteigend ist.

5. Schnittstelle gemäß Anspruch 3, **dadurch gekennzeichnet, dass** der Querschnitt des Bajonettelements (106) ein Rechteck, ein Trapez oder Dreieck ist, wobei beim Trapez die längere Basisseite in der dortigen Zapfenoberfläche liegt.

6. Schnittstelle gemäß Anspruch 1, **dadurch gekennzeichnet, dass** der Zapfen (100) als dritten Steg (111) einen Auswurfsteg aufweist, an dessen dem Spannelement (60) zugewandten Flanke (112) das Spannelement (60) beim Lösen der zweiten Baugruppe (20, 220) zur Anlage kommt.

7. Schnittstelle gemäß Anspruch 1, **dadurch gekennzeichnet, dass** das Spannelement (60) eine Exzenterschraube ist.

8. Schnittstelle gemäß Anspruch 7, **dadurch gekennzeichnet, dass** die Exzenterschraube (60) einen Exzenterzapfen (65) aufweist und zwischen einer Löse- und Klemmposition einen Schwenkwinkel von 180 bis 270 Winkelgraden benötigt.

9. Schnittstelle gemäß Anspruch 7, **dadurch gekennzeichnet, dass** der Schwenkwinkel der Exzenterschraube (60) durch einen quer zur Exzenterschraube (60) angeordneten Anschlagstift (56) begrenzbar ist, wobei sich die Mittellinien der Exzenterschraube (60) und des Anschlagstifts (56) kreuzen.

10. Schnittstelle gemäß Anspruch 1, **dadurch gekennzeichnet, dass** der hintere Bereich der Ausnehmung (30) der ersten Baugruppe (20, 220) - zur Aufnahme eines zylindrischen Bolzens (127) der zweiten Baugruppe (90) - eine zylindrische Bohrung (35) aufweist, wobei das Spiel zwischen dem Bolzen (127) und der Bohrung (35) kleiner als 0,1 mm ist.

## Claims

1. Interface adapter comprising a first module (20, 220) and a second module (90), said first module holding a tool or a tool holder and said second module supporting a processing element for the rotating or static processing of work,
- said first module (20, 220), when constituting part of a rotatable spindle (12) or part of a chisel (220, 239), having therein a recess (30) which includes, on the one hand, at least one section (32) in a frustroconical or cylindrical shape and, on the other hand, an engagement surface (24, 224) or contact site acting axially, i.e. in the direction of the second module (90), and
- the second module (90) having a shank (100) including, on the one hand, a conical, frustroconical or cylindrical section (120) for engaging the frustroconical or cylindrical section (32) of the first module (20, 220) and, on the other hand, at least one axially acting contact site or engagement surface (121) for contacting the engagement surface or contact site (24, 224) of the first module (20, 220),
with a bayonet-type lock provided between the recess (30) of the first module (20, 220) and the shank (100) of the second module (90), said lock comprising at least one fin (106, 115) provided on the shank (100), and with the first module (20, 220) having therein a tensioning element (60) of which the front end engages a least one fin (105, 115) as the device is being placed under tension, **characterized in that**,
- for being clamped in a spindle head (20) of the spindle (12), fin (106) of the bayonet-like lock has a first clamping flank (107) of which the slope angle is smaller than 30 degrees, and **in that**
- the fin (106) of the bayonet-like lock has, for clamping the chisel (220, 239) in the chisel head (220), a second clamping flank (254) of which the slope ranges between 50 and 80 degrees of an angle.

2. Interface adapter as claimed in claim 1, **characterized in that** both clamping flanks (107, 254) of the fin (106) have normals perpendicular thereto, said normals each comprising a vector component - relative to the central line of the second module (90) - at least approximately oriented in the circumferential direction (3) in which the module (90) is pivoted for clamping.

3. Interface adapter as claimed in claim 1, **characterized in that** at least one of fins (106, 115) constitutes a bayonet element in the form of a segment of a thread, said thread segment having a pitch angle of 12 ± 2 degrees and a length covering 10 to 60 degrees of a 360 degree revolution.

4. Interface adapter as claimed in claim 3, **characterized in that** the bayonet element (106) is right-handed.

5. Interface adapter as claimed in claim 3, **characterized in that** the cross-section of bayonet element (106) is a trapeze or a triangle and that, in the case of a trapeze, the longer base side extends in the shank surface.

6. Interface adapter as claimed in claim 1, **characterized in that** the shank (100) comprises as a third fin (111) an ejector fin, with tensioning element (60) engaging the flank (112) of said ejector fin facing the element (60) as the second module (20, 220) is being released.

7. Interface adapter as claimed in claim 1, **characterized in that** the tensioning element (60) is an excentric screw.

8. Interface adapter as claimed in claim 7, **characterized in that** the excentric screw (60) has an excentric stud and requires a pivoting angle of 180 to 270 degrees between its released and clamping positions.

9. Interface adapter as claimed in claim 7, **characterized in that** the pivoting angle of the excentric screw (60) is adapted to be limited by an abutment pin (56) transverse to the excentric screw (60), with the center lines of the excentric screw (60) and of the abutment pin (56) intersecting.

10. Interface adapter as claimed in claim 1, **characterized in that** the rear area of the recess (30) of the first module (20, 220) has therein a cylindrical bore (35) for receiving a cylindrical bolt (127) of the second module (90), with the clearance between the bolt (27) and the bore (35) being smaller than 0.1 mm.

## Revendications

1. Interface composée d'un premier module (20, 220) portant un outil ou un porte-outil et d'un deuxième module (90) portant un élément d'usinage pour un usinage par rotation ou un usinage statique,
- le premier module (20, 220) - comme partie d'une broche mobile en rotation (12) ou partie d'un burin (220, 239) - présentant d'une part un évidement (30) qui possède au moins une partie en forme de surface tronconique ou cylindrique (32) et d'autre part une surface d'appui (24, 224) ou un point de contact agissant dans le sens axial, en direction du deuxième module (90), et
- le deuxième module (90) possédant un tenon (100) qui possède d'une part une partie en forme conique, tronconique ou cylindrique (120) destinée à s'appuyer sur la partie en forme de surface tronconique ou cylindrique (32) du premier module (20, 220) et d'autre part au moins un point de contact ou une surface d'appui (121) agissant dans le sens axial, pour contacter la surface d'appui (24, 224) ou le point de contact du premier module (20, 220),
- une fermeture de type à baïonnette dotée d'au moins un élément de liaison (106, 115) situé sur le tenon (100) se trouvant entre l'évidement (30) du premier module (20, 220) et le tenon (100) du deuxième module (90) et
- un élément de serrage (60), dont l'extrémité avant vient en appui contre au moins un des éléments de liaison (105, 115) lors du serrage, étant disposé dans le premier module (20, 220), **caractérisé en ce**
- **que** l'élément de liaison (106) de la fermeture de type baïonnette a un premier flanc de serrage (107) d'un angle d'hélice inférieur à 30 degrés pour le serrage de la broche (12) dans une tête de broche (20),
- **que** l'élément de liaison (106) de la fermeture de type baïonnette a un deuxième flanc de serrage (254) d'un angle d'hélice entre 50 et 80 degrés pour le serrage du burin (220, 239) dans une tête de burin (220).

2. Interface selon la revendication 1, **caractérisée en ce que** les deux flancs de serrage (107, 254) de l'élément de liaison (106) ont des normales à la surface qui ont chacune une composante de vecteur, qui sont orientées, par rapport à la ligne médiane du deuxième module (90), au moins approximativement dans la direction de la circonférence (3) vers laquelle le module (90) pivote pour le serrage.

3. Interface selon la revendication 1, **caractérisée en ce qu'**au moins un des éléments de liaison (106, 115) est un élément baïonnette à la forme d'un tronçon fileté dont l'angle d'hélice est de 12 ± 2 degrés et qui a une longueur qui couvre 10 à 60 degrés de l'angle de révolution de 360 degrés.

4. Interface selon la revendication 3, **caractérisée en ce que** l'élément baïonnette (106) est de rotation à droite.

5. Interface selon la revendication 3, **caractérisée en ce que** la section transversale de l'élément baïonnette (106) est un rectangle, un trapèze ou un triangle, le côté de base le plus long du trapèze se trouvant dans la surface correspondante du tenon.

6. Interface selon la revendication 1, **caractérisée en ce que** le tenon (100) possède comme troisième élément de liaison (111) un élément d'éjection où l'élément de serrage (60) vient en appui, du côté du flanc (112) orienté vers l'élément de serrage (60), lors du desserrage du deuxième module (20, 220) .

7. Interface selon la revendication 1, **caractérisée en ce que** l'élément de serrage (60) est une vis excentrique.

8. Interface selon la revendication 7, **caractérisée en ce que** la vis excentrique (60) possède un tourillon excentrique (65) et nécessite, entre une position de desserrage et une position de serrage, un angle de pivotement entre 180 et 270 degrés.

9. Interface selon la revendication 7, **caractérisée en ce que** l'angle de pivotement de la vis excentrique (60) peut être limité par l'intermédiaire d'une tige d'arrêt (56) positionnée transversalement à la vis excentrique (60), les lignes médianes de la vis excentrique (60) et de la tige d'arrêt (56) se croisant.

10. Interface selon la revendication 1, **caractérisée en ce que** la section arrière de l'évidement (30) du premier module (20, 220) présente un alésage cylindrique (35) pour recevoir une goupille cylindrique (127) du deuxième module (90), le jeu entre la goupille (127) et l'alésage (35) étant inférieur à 0,1 mm.
